# EUROPEAN PATENT APPLICATION

(11) **EP 1 641 097 A1**
(43) Date of publication of application: **29.03.2006**
(21) Application number: 04077648.6
(22) Date of filing: 24.09.2004
(51) Int. Cl.: H02G 3/30

(54) **Cable clamp**

(71) Applicant: Kommers, Gerardus Johannes Antonius Wilhelmus, 4463 WT Goes (NL)
(72) Inventor: Kommers, Gerardus Johannes Antonius W., 4463 WG Goes (NL)
(74) Representative: van Westenbrugge, Andries

(57) **Abstract**

Cable clamp comprising mounting part (1), an end part (15) and a clamping device (30). The mounting part (1) comprises a wall plate (7) to mount the mounting part (1) to a fixed structure. It comprises with a first segment (2), extending from the wall plate (7), and comprises a first recess (3) for accommodating at least one cable (31) and a first hole (5) that is accessible from an end surface opposite to the wall plate (7). The end part (15) comprises a second segment (17) with dimensions such that it can be slidden into and accommodated by the first hole (5) of the mounting part (1). The clamping device (30) is arranged to clamp the at least one cable (31) in the first recess (3) of the mounting part (1). The capacity of the cable clamp may be increased by adding at least one extension part (10) that is arranged to be positioned between the mounting part (1) and the end part (15).

## Description

The invention relates to cable clamps. More particularly the invention is concerned with clamps for electrical cables, especially, but not limited to, electrical cables for medium and high voltages. These kind of cables are widely used in the industry, for instance the petrochemical industry. Generally, these cables are clamped by cable clamps comprising two parts: a bottom part that is mounted on a fixed structure, e.g. a cable ladder, having a recess for supporting one or more cables, and a top part that fits on top of the bottom part, the top part also having a recess, which faces the recess of the bottom part. The combination of the two parts then accommodates the cables and the two parts are then rigidly attached to each other by bolts and nuts or the like.

The installment of electric cables is laborious and time-consuming. Typically, a cable weighs 10 kilograms per linear meter! Generally, first a cable ladder, generally with rungs spaced about 30-70 cm apart, is installed. Then cable clamps as the ones described above are mounted on the rungs to clamp the cables that are supported by the ladder. Consecutively, the cables have to be positioned in the clamps, the cables have to be straightened, and the clamps need to be closed and tightened. Moreover, the available space to install cables is limited.

Cable ladders are generally constructed from some kind of metal. As a result they are heavy. Mounting a cable ladder therefore takes at least two persons. Additionally a cable ladder is susceptible to moist and expensive. It is therefore desired to find a way to install cables without the use of a cable ladder.

A disadvantage of most cable clamps is that they are relatively inflexible with respect to the cable diameters they are able to accommodate. However, several diameters are widely used. Moreover, it is rather common to use cable clamps that can accommodate three cables in a trefoil arrangement. Especially when they carry a three phase supply, this may be compulsory. In a trefoil arrangement, a different diameter of the cable will even have a more profound influence on the clamp that is chosen to hold the cables firmly.

The object of the present invention is to provide a cable clamp that can be used without the use of a cable ladder, can be installed by a single person, can withstand moist environments, and can accommodate cables with different diameters. The invention therefore provides a cable clamp as defined in claim 1.

Additional advantageous embodiments of a cable clamp according to the present invention are defined in claims 2-8.

The invention further relates to a mounting part for use in a cable clamp as defined in claim 9, an extension part for use in a cable clamp as defined in claim 10, an end part for use in a cable clamp as defined in claim 11, and a cable gliding unit for use in a cable clamp as defined in claim 12.

Embodiments of the invention will now be described, by way of example only, with reference to the accompanying schematic drawings in which corresponding reference symbols indicate corresponding parts, and in which:
FIGURE 1 schematically shows a cable clamp according to an embodiment of the present invention;
FIGURE 2 shows a guiding unit according to an embodiment of the present invention;
FIGURE 3 shows an extension part provided with a guiding element;
FIGURE 4 shows a cable gliding unit according to an embodiment of the present invention;
FIGURE 5 shows a side view of a cable clamp according to an embodiment of the invention, provided with guiding elements and clamping means.

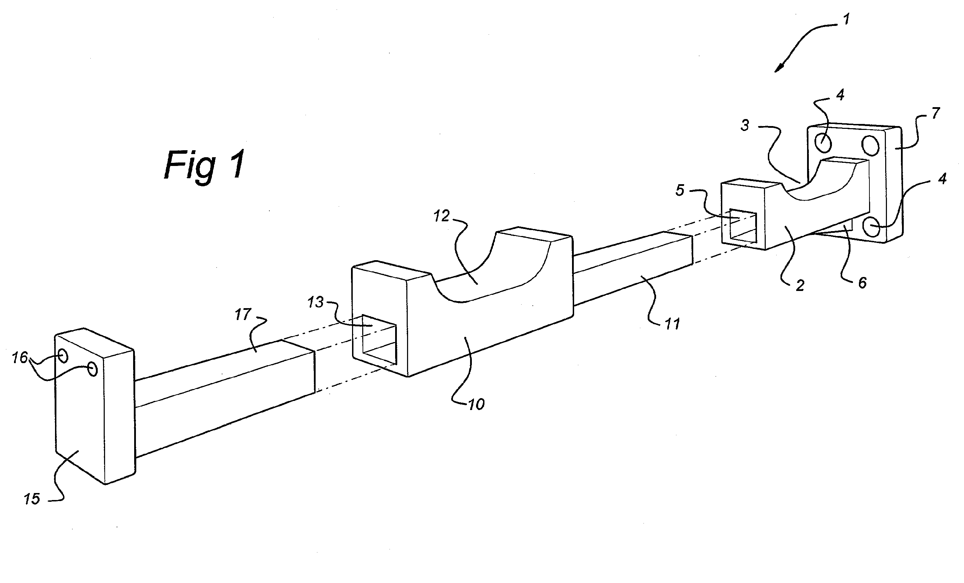

Figure 1 schematically shows a cable clamp according to an embodiment of the present invention. The cable clamp at least comprises a mounting part **1** and an end part **15**. In embodiments of the invention, one (as shown in fig. 1) or more extension parts **10** may be added between the mounting part **1** and the end part **15**. The mounting part **1** is arranged to be mounted to a fixed structure like a wall or a ship's side through one or more openings **4** in a wall plate **7** by using mounting devices, like bolts or screws. Furthermore, mounting part **1** comprises a segment **2** having a recess **3** for accommodating one or more cables, and being fixed to the wall plate **7**. Segment **2** also comprises an elongated hole **5**, extending in use in a direction substantially perpendicular to the fixed structure and accessible from an end surface opposite to the wall plate **7**. In use, the cables are laid in the recess **3** in a direction substantially parallel to the fixed structure. The strength of the mounting part **1** may be enhanced by adding an additional supporting segment **6** that is fixed to both the wall plate **7** and the bottom side of segment **2**.

Extension part **10** is provided with a recess **12** for accommodating one or more cables, and comprises a segment **11**. Again, in use the cables are laid in the recess **12** in a direction substantially parallel to the fixed structure. Extension part **10** also comprises an elongated hole **13** extending in use in a direction substantially perpendicular to the fixed structure. In use, segment **11** extends in a direction substantially perpendicular to the fixed structure. Its dimensions are adapted to the size of elongated hole **5** (as shown in fig. 1) and/or **13**. When a segment **11** is positioned in one of the elongated holes **5** or **13**, the cable clamp is able to accommodate an additional number of cables. It is possible to add a number of extension elements. The exact number of extension elements **10** that can be added to increase the capacity of the cable clamp depends on several parameters, like the dimensions of the clamp elements **2, 10, 15**, the number, weight and size of the cables, and the strength of the connection of the mounting part **1** with the fixed structure.

The end part **15** comprises a segment **17**, which is adapted to the size of elongated hole **5** or **13** (as shown in fig. 1). Additionally, end part **15** is arranged to cover the side of the clamp away from the fixed structure to shield the interior of elongated hole **5** or **13** from external hazards like moisture. Furthermore, end part **15** may be arranged to accommodate clamping devices, for instance by attaching a clamping mechanism using holes **16**.

In the shown embodiment, mounting part **1**, a single extension part **10**, and end part **15** are not connected to each other. However, in use, they are connected to each other. To that end, then segment **11** of extension part **10** is placed in elongated hole 5 of mounting part **1**. In the same fashion, segment **17** of end part **15** is placed in elongated hole **13** of extension part **10**. The parts are preferably connected by some connecting mechanism at one or more predetermined relative positions. In an embodiment, elongated holes **5** and/or **13** are provided with an additional cut-away, while segment **11** of extension part **10** and segment **17** of end part **15** are provided with a bulge that fits in the cut away. By sliding the segments **11,17** in the elongated holes **5, 13** respectively until the bulge falls into the cut away, two parts of the cable clamp can be connected. In an alternative embodiment of a connection mechanism, segments **11, 17** as well as the main portions of mounting part **1** and extension part **10** comprise through holes in a direction substantially perpendicular to the segments **11, 17** and elongated holes **5, 13**, respectively. In this case, segments **11, 17** are pushed into the elongated holes **5, 13** respectively until the respective holes are aligned. When aligned, the parts to be connected are secured by employing connecting devices, e.g. a pin or a bolt. It must be understood that besides the two mentioned connection mechanisms, also other mechanisms may be used.

The dimensions and shapes of segments **11, 17** is not limited to the ones shown in the figures. Segments **11, 17** may be combined to form a single segment (not shown). In this case, elongated hole **13** is a through hole.

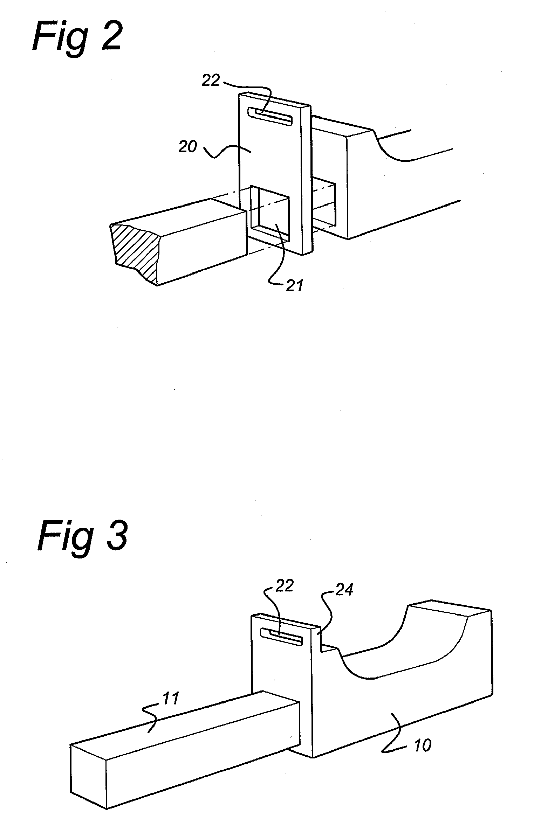

In order to clamp the cables, clamping devices need to be arranged. In an embodiment as shown in figure 1, the clamping devices may comprise a strap that is fixed to or mounted to the mounting part **1** and adjustably fixed to the end part **15**, for instance by using holes **16**. By tightening the strap with an adjustment device, the cables are clamped. However, the clamping of the cables close to the positions of fixation are generally clamped tighter than cable further away. Especially when cables of different diameters, i.e. 20-80 mm, need to be clamped in a single cable clamp, a clamping device with only fixation points at both ends may reduce the quality of clamping. To improve the quality of the clamping of cables in separate recesses **3, 12**, especially when each recess **3, 12** comprises cables with a different diameter, additional devices are needed. Embodiments of such devices are shown in figures 2 and 3.

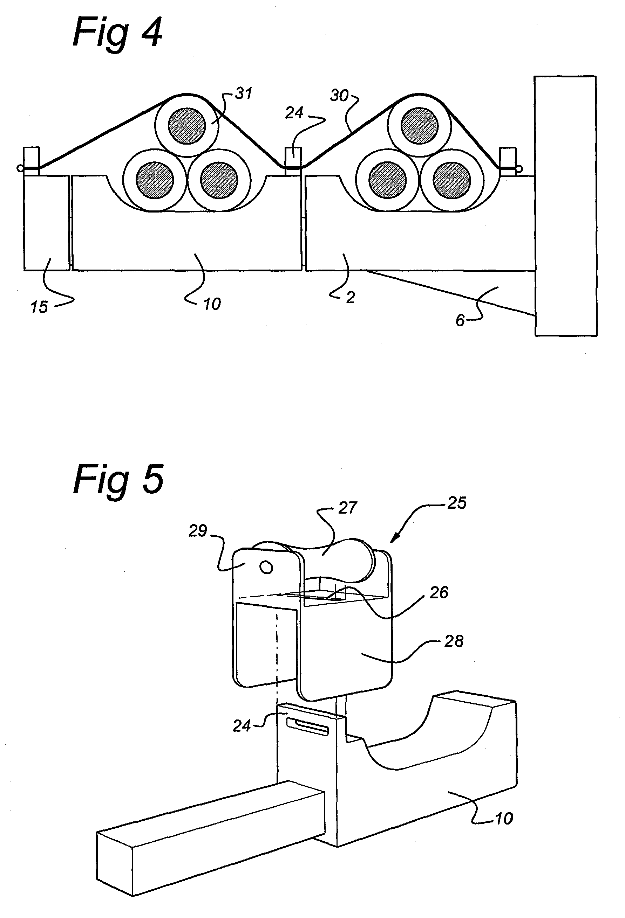

Figure 2 shows a guiding unit **20** according to an embodiment of the present invention. The guiding unit **20** comprises a plate, preferably having the same width as any of the parts **1, 10, 15**. The guiding unit **20** is provided with a through hole **21**, which dimensions at least exceed the dimensions of segment **11** of extension part **10** and segment **17** of end part **15**. Guiding unit **20** can be slidden over segments **11** or **17** as is shown in figure 2. As can be seen in the figure the height of guiding unit **20** exceeds the height of the part it is attached to. In the elevated portion, the guiding unit **20** is provided with an additional hole **22**, which preferably has an elongated shape. The hole **22** is able to guide a clamping device, like a strap or the like. In this fashion, the cables in each recess **3, 12** can be clamped per recess. This will be shown in more detail in figure 4.

Figure 3 shows an extension part **10** provided with a guiding wall **24** extending in a substantially upright position provided with additional hole **22**, preferably an elongated hole. It serves the same purpose and operates in a similar fashion as described for the guiding unit **20** shown in figure 2. A clamping device, like a strap or the like, may be guided through the hole **22**. Similar structures with wall **24** and hole **22** may be provided on the mounting part **1** and the end part **15**. In figure 3, the wall **24** is drawn at the side of the recess **12** facing segment **11**. It must be understood that it may also be located at the other side of the extension part **10**.

Using a guiding unit **20** or wall **24** as depicted in figures 2 and 3 or a combination of the two, enables the clamping of cables in each recess **3, 12** separately. Figure 4 shows a side view of a cable clamp according to an embodiment of the invention, provided with both guiding and clamping devices to clamp cables **31** (shown in cross section). As can be seen, the cables **31** in each recess **3, 12** are clamped per recess **3, 12** by a strap **30**. Sometimes, the cables in one recess **3, 12** have a different diameter than the cables in another recess **3, 12**. When the difference is larger than desired, an insert element (not shown) may be placed in the recess **3, 12** with the small-diameter cables to elevate its supporting surface.

In this embodiment three cables **31** are clamped in a trefoil arrangement per recess **3, 12** by the strap **30**. It is noted that in many circumstances three cables **31** are clamped, however it must be understood that it is also possible to clamp a different number of cables **31**. The strap **30** may be fixed at one side, generally the mounting part as shown in figure 5, guided through the guiding structures provided with holes **22** and adjustably fixed at the other side, generally on the end part **15** as shown in figure 5. The adjustable fixation may be performed by any known tightening device known in the art. Instead of a strap **30** also other flexible clamping media may be used, for instance a tie wrap of a material like a high quality synthetic to minimize the susceptibility to moisture. The tie wrap may be provided with transverse rips and the hole **22** may have one or more milled or serrated edges.

The clamping media may have different colors or different fluorescence properties to inform someone about a property, for instance a voltage, of the cables **31** that are clamped.

Figure 5 shows a cable gliding unit **25** according to an embodiment of the present invention. The cable gliding unit **25** can be used during positioning of the cables in one of the recesses **3, 12**. The positioning of cables is generally performed when all cable clamps are in place, i.e. cable clamps being mounted to the fixed structure (wall, ship's side etc.) at a predetermined distance from one another. Then, with one cable at a time, the cable to be positioned is pulled over all the clamps it needs to be positioned in. Generally the cables are pulled in a discontinuous fashion. Therefore, the load on each clamp is not only highly time-variant, but may also be extremely high. Moreover, it is directed in the pull direction, a direction for which a cable clamp is not primarily designed. It is therefore desired that the cables are guided during the pulling process.

The cable gliding unit **25** is shaped as first and second U-profiles **28, 29** connected together with open ends facing away from each other, where the U-profiles **28, 29** are rotated over 90 degrees with respect to each other. The space between the non-connecting surfaces of a first U-profile **28**, facing down in figure 5, is equal to or slightly larger than the width of the parts **1, 10, 15**. It is therefore possible to move the cable gliding unit **25** over each part **1, 10, 15** of the cable clamp. The connecting surface of first and second U-profiles **28, 29** comprises a slit **26**. The slit **26** has a width that corresponds or is slightly larger than the width of guiding unit **20** / wall **24** provided with hole **22** for guiding a clamping device. In figure , the slit **26** is placed symmetrically between two standing surfaces of second U-profile **29**. Of course, it is also possible to have an asymmetric arrangement, as long as the position of the cable gliding unit **25** may be fixed by the guiding unit **20** / wall **24**. The cable gliding unit **25** can thus be placed exactly on top of such a guiding unit **20** / wall **24**. It can be readily seen that this placement is easy, and that its position is fixed. The second U-profile **29** is provided with a pulley **27**. Before pulling the cables, all cable clamps are provided with cable gliding units **25**. Then the cables are pulled over the pulleys **27** until the desired cable length is obtained. Due to the limited friction of the pulley **27**, the pulling is easy and the work load on the cable clamps in the pull direction is low. When the cable has the desired length, the cable can be lifted slightly after which the cable gliding units **25** are removed by shifting and the cable is placed in the correct recess **3**, **12.** As a result placing the cables in recesses **3, 12** by employing the cable gliding units **25** not only reduces the load on the cable clamps, but also makes the labor less demanding for personnel.

All parts are drawn as solid rectangular structures. It must be understood that all kind of shapes, e.g. with rounded edges, are possible without leading away from the scope of the invention. When possible, material may be removed to provide the parts with reinforcement ribs, a technique which is known in the art.

All parts are preferably made of synthetic material, for instance a fiberglass-strengthened polyamide. This material is strong and not susceptible to degrading effects like moisture.

The invention is in no way limited by the embodiments explained above but only by the appended claims, including all technical equivalents of all claimed features.

## Claims

1. Cable clamp comprising:
- a mounting part (1) comprising a wall plate (7) to mount the mounting part (1) to a fixed structure, and a first segment (2) extending from said wall plate (7), comprising a first recess (3) for accommodating at least one cable (31) and comprising a first hole (5) that is accessible from an end surface opposite to said wall plate (7);
- an end part (15) comprising a second segment (17) with dimensions such that it can be slidden into and accommodated by said first hole (5) of said mounting part (1), and
- a clamping device (30) arranged to clamp the at least one cable (31) in the first recess (3) of the mounting part (1).

2. Cable clamp according to claim 1, the clamp further comprising at least one extension part (10) arranged to be positioned between said mounting part (1) and said end part (15), provided with a second recess (12) for accommodating at least one further cable (31), comprising a second hole (13) with substantially the same dimensions as said first hole (5), and a third segment (11) with dimensions such that it can be slidden into and accommodated by one of said first (5) and second hole (13).

3. Cable clamp according to claim 2, wherein said extension part (10) is provided with a guiding wall (24) comprising a through hole (22) for guiding the clamping device (30).

4. Cable clamp according to claim 1 or 2, wherein said cable clamp further comprises a guiding unit (20), said guiding unit (20) comprising a plate provided with a first through hole (21) having dimensions that are at least as large as a cross-sectional area of said first hole (5), and a second through hole (22) for guiding the clamping device (30).

5. Cable clamp according to claim 3 or 4 wherein the cable clamp is furthermore provided with a cable gliding unit (25), the cable gliding unit (25) being shaped as first and second U-profiles (28, 29) connected together with open ends facing away from each other, where the first and second U-profiles (28, 29) are rotated over substantially 90 degrees with respect to each other, the cable gliding unit (25) comprising a slit (26) with a size that at least corresponds with a size of one of said guiding unit (20) and guiding wall (24), and comprising a pulley (27) for guiding the cables (31) during installment.

6. Cable clamp according to any one of the preceding claims, wherein the clamp is arranged to clamp three cables (31) per recess (3, 12).

7. Cable clamp according to claim 2, wherein at least one of the mounting part (1) the extension part (10) and the end part (15) is made of a fiberglass-strengthened polyamide.

8. Cable clamp according to any one of the preceding claims, wherein the clamping device (30) is a flexible medium that is fixed at the mounting part (1) by a first fixation and the end part (15) by a second fixation, at least one of said first and second fixation being adjustable.

9. Mounting part (1) for use in a cable clamp according to any of the claims 1-8, and comprising a wall plate (7) to mount the mounting part (1) to a fixed structure, and provided with a segment (2) extending from said wall plate (7), comprising a recess (3) for accommodating at least one cable (31) and comprising a hole (5).

10. Extension part (10) for use in a cable clamp according to any of the claims 1-8, and provided with a recess (12) for accommodating at least one cable (31), the extension part (10) comprising a hole (13) and an elongated segment (11).

11. End part (15) for use in a cable clamp according to any of the claims 1-8, and comprising an elongated segment (17) and arranged to cover an end surface of either a mounting part according to claim 9 or an extension part as claimed in claim 10, and arranged to serve as a fixing location for a clamping device (30).

12. Cable gliding unit (25) for use in a cable clamp according to any of the claims 1-8, and being shaped as first and second U-profiles (28, 29) connected together with open ends facing away from each other, where the first and second U-profiles (28, 29) are rotated over substantially 90 degrees with respect to each other, the cable gliding unit (25) comprising a slit (26) for placement and fixation and a pulley (27) for guidance of one or more cables (31) during installment.
